Europäisches Patentamt

European Patent Office

Office européen des brevets

(11) Publication number: **0 023 061**
**B1**

## (12) EUROPEAN PATENT SPECIFICATION

(45) Date of publication of patent specification: **17.04.85**

(21) Application number: **80200666.8**

(22) Date of filing: **08.07.80**

(51) Int. Cl.⁴: **C 08 F 236/10, C 09 J 3/14, C 08 F 212/06, C 08 L 53/02**

(54) Hydrocarbon resins, their preparation and their use in adhesives.

(30) Priority: **17.07.79 NL 7905548**

(43) Date of publication of application:
**28.01.81 Bulletin 81/04**

(45) Publication of the grant of the patent:
**17.04.85 Bulletin 85/16**

(84) Designated Contracting States:
**AT BE CH DE FR GB IT LI NL SE**

(56) References cited:
**FR-A-2 047 098**
**FR-A-2 352 842**
**FR-A-2 372 848**
**FR-A-2 388 830**
**US-A-3 459 699**

(73) Proprietor: **DSM RESINS BV**
**Ceintuurbaan 5**
**NL-8022 AW Zwolle (NL)**

(72) Inventor: **Runavot, Yves**
**204 Boulevard de Créteil**
**F-94100 St.Maur des Fosses (FR)**
Inventor: **Billault, Georges**
**5 Rue Ottino**
**F-93000 Saint Ouen (FR)**
Inventor: **Salvetat, Jacques**
**27 Avenue Corot**
**F-78110 Le Vésinet (FR)**

(74) Representative: **van Leeuwen, Hendrik Bernardus et al**
**Octrooibureau DSM Postbus 9**
**NL-6160 MA Geleen (NL)**

EP 0 023 061 B1

Courier Press, Leamington Spa, England.

## Description

The invention relates to solid hydrocarbon resins containing dicyclopentadiene, a vinyl-aromatic hydrocarbon and a mono-, di, or tri substituted benzene in which the substituent(s) are chosen among lower alkyl, hydroxyl and halogen and their use in adhesive formulations.

Solid hydrocarbon resins containing dicyclopentadiene (often abbreviated to dcpd) and vinyl-aromatic hydrocarbons are known from US—A—3 640 977 (Gonzenbach). These resins contain 55—75% of vinyltoluene, 5—20% of alpha-methylstyrene, 1—25% of dicyclopentadiene and 0—15% of an acrylic compound being (meth)acrylic acid or an alkylester thereof. These hydrocarbon resins are useful for adhesives and hot-melt compositions. However, the performances of these hydrocarbon resin in adhesives are not quite satisfactory. It has now been found that the balance of adhesive properties, in particular compatibility and shear adhesion, is improved if dicyclopentadiene, vinyl-aromatic compound and the substituted phenol are present in the resin in certain well defined quantities.

It is known from FR—A—2 372 848 (BASF) to prepare resins based on i.a. dicyclopentadiene, a vinylaromatic compound and maleic anhydride, derivative thereof or other unsaturated acids which monomers are polymerized at temperatures of 230 to 320°C under pressure. These resins including maleic anhydride or other acid and are prepared by thermal polymerization at high temperatures and pressures resulting in Diels-Alder addition products to the cycloheptene ring of dcpd having a high softening point (abt. 200°C) and have a tendency to revert to the monomeric material. They are useful in printing inks.

It is known from FR—A—2 388 830 (Mitsui Petrochemicals) to prepare a coal-tar replacement by cationic polymerization of dicyclopentadiene, a by-product of phenol production and/or a vinyl-aromatic compound. The by-product of phenol manufacture contains little or no phenols but is comprised of ketones, ethers and non-identified matter. The product obtained is a low melting tarry product with a colour of typically 18 Gardner and the only example involving dicyclopentadiene, vinylaromatic compound (-methylstyrene) and a cresol residue (Example 18) has a softening point of 38°C and is obtained in a yield of 33%. The products are dark coloured and unsuitable for adhesives also in view of their high softening.

The present invention provides a solid copolymer tackifying resin useful in adhesives, prepared by Friedel-Craft-type polymerization essentially consisting of dicyclopentadiene, a vinylaromatic hydrocarbon, a mono-, di- or tri-substituted benzene in which the substituents are chosen among lower alkyl, hydroxyl and halogen, and optionally a pentadiene and a $C_1$—$C_{12}$ alkyl ester of an unsaturated carboxylic acid, in which the monomers are present in the following ratios: 1 mole of dicyclopentadiene per 0.7—1.5 moles of vinyl- aromatic compound, 0—3 moles of pentadiene and 0.00—0.25 mole of ester per mole of dicyclopentadiene and such an amount of substituted benzene that per average molecule of resin 0.5 to 1.5 molecule of substituted phenol is present.

Dicyclopentadiene can be used as the pure chemical compound but it is often advantageous to use a dicyclopentadiene concentrate or technical grade containing 60% or rather 80% by weight or more of the compound.

The vinylaromatic compound in the resin can be e.g. styrene, a methyl-styrene or a vinyltoluene, but styrene is preferred.

Again the pure compound can be used but technical grades or concentrates containing at least 60% or rather 80% by weight of one or more vinylaromatic compounds can be used with advantage.

Resins having a better compatibility with ethylene vinyl acetate copolymer are obtained if the hydrocarbon resin is "alkylated", i.e. by incorporation into the resin of mono-, di- or tri-substituted benzene in which the substituents are chosen among low alkyl ($C_1$—$C_{12}$), hydroxyl and halogen. The amount of substituted benzene in the resin varies from 0.5 to 1.5 molecules of substituted benzene per average molecule of resin. Phenols are preferred "alkylating" agents, in particular phenol itself and alkylated phenols, in which the alkyl group contain 1—12, in particular 5—12 carbon atoms. The use of phenol and octyl phenol in combination leads to optimal compatibility. The amount of alkylating agent in the resin and its average molecular weight are such that between 0.5 and 1.5, preferably 0.8 to 1.2 moles of alkylating agent are present per average molecule of the resin, so that the majority of the resin molecules are believed to contain one alkyl group.

However, the alkylating agent may be present in the reaction mixture in higher molar ratios than indicated above and partly act as a solvent, which is distilled off after termination of the reaction.

It is also preferred that the hydrocarbon resin contains a pentadiene, preferably piperylene, i.e. 1.3-pentadiene (cis and trans). Resins containing pentadiene, in particular piperylene, are preferred because pentadiene confers better tack, particularly with respect to polyester and polyolefin substrates, and compatibility to the resin. Again pure piperylene can be used, but usually technical grade pentadiene or piperylene concentrates containing more than 45% of pure pentadienes can be used, provided they contain less than 5% of isoprene, the remainder being monoenes, dicyclopentadiene methyl cyclopentadiene and non-polymerisable products.

The amount of pentadiene in the resin ranges from 0—3 per mole of dicyclopentadiene, preferably from 0—2.

Hydrocarbon resins having a paler colour and/or optionally a better solubility are those also containing 0.00 to 0.25 mole per mole of dicyclopentadiene of a $C_1$—$C_{12}$-alkyl ester of an unsaturated carboxylic acid. Alpha-beta-unsaturated acids, such as acrylic acid and methacrylic acid, are preferred.

The solid hydrocarbon resins according to the present invention is prepared optionally in the presence of a solvent, e.g. methylcyclohexane and a minor amount, e.g. 0.2—5%, based on monomers of a Friedel Crafts catalyst, such as $BF_3$ or complexes thereof (both are preferred), $AlCl_3$, or $TiCl_4$, at temperatures from 0—80°C, preferably 20—50°C, after which the catalyst is neutralized with alkali or alkaline earth hydroxide, eliminated and volatiles are stripped off.

As the reaction is exothermic, tight control of the reaction rate is necessary. Several methods for carrying out the reaction therefore proved to be practicable:

A) Part of the solvent is used to dissolve alkylating agent (e.g. phenol) + catalyst and a blend of monomers with the remainder of the solvent is then added gradually.

B) Monomers, alkylating agent and solvent are blended and the catalyst is slowly added.

C) Monomers, solvent and alkylating agent are continuously added to the reactor simultaneously with the catalyst.

The hydrocarbon resin thus obtained is a light-coloured solid with a softening point (Ring- + Ball) of 70—160°C (ASTM E28) and is useful for adhesive formulations, in particular in adhesives when used in combination with ethylene vinyl acetate copolymers, optionally together with a microcrystalline wax or paraffin wax. The compatibility differs from one hydrocarbon resin to another and depends also on the type of ethylene vinylacetate copolymer used, particularly of the percentage of vinyl acetate contained therein, but in many instances good compatibility resulting in clear or opalescent mixtures with a low cloud point is obtained.

The present invention thus also provides mixtures containing 10—75%, preferably 20—50% by weight of a hydrocarbon resin as described above and ethylene vinylacetate copolymer and optionally a microcrystalline or paraffin wax, which mixtures are usually obtained by melting the resin and wax and any optional further constituents like antioxidants, stabilizers and fillers.

The hydrocarbon resins described above are also useful for pressure-sensitive adhesives, in particular those containing pentadiene, for which purpose such a hydrocarbon resin is mixed with a natural or synthetic rubber and optionally an organic solvent. For hot melt pressure-sensitive adhesive instead of a solvent a tackifying oil is used with or without ethylene vinylacetate copolymers.

The balance of properties of these pressure-sensitive adhesives, such as peel adhesion or peel strength (determined according to PSTC-1), tack (determined according to PSTC-6 (modified)) and shear adhesion (determined according to PSTC-7), is better than that of the adhesives based on hydrocarbon resins known in the art.

The invention is illustrated by the following Examples:

### Example 1

40 parts of dicyclopentadiene (85% purity), 20 parts of styrene (molar ratio 1:0.75) and 75 parts of toluene and 1% of boron trifluoride diether complex in the toluene were reacted at 30°C for 4 hours. The reaction mixture was neutralized with ammonia, filtered and volatiles were stripped off. The hydrocarbon resin was obtained in 107% yield, calculated on dcpd and styrene taken together, indicating that some toluene groups are included in the resin which showed a softening point of 96°C.

### Example 2

40 parts of dicyclopentadiene (85% purity), 20 parts of styrene (molar ratio 1:0.75) and 75 parts of xylene are reacted at 40—45°C for 4 hours in the presence of 0.5% boron trifluoride. The catalyst is inactivated and eliminated. Volatiles are stripped off. Yield: 98% of resin with a softening point of 88°C. This resin contained at most a small percentage of alkyl groups from xylene and had a better compatibility with ethylene vinyl acetate copolymers than the previous Example.

### Example 3

30 parts of dicyclopentadiene (85% purity), 21 parts of styrene (molar ratio 1:1) and 75 parts of xylene are reacted as described above in Example 4. Volatiles, including free dicyclopentadiene, are stripped off. The resin is obtained in a 82% yield; softening point 118°C.

### Example 4

30 parts of dicyclopentadiene (85% purity), 21 parts of styrene (molar ratio 1:1) and 75 parts of a solvent mixture consisting for 99% of aromatic hydrocarbons (boiling point 158—171°C and mainly consisting of alkylbenzenes) (Solvesso 100, ex Esso Oil, N.J., U.S.A.), were reacted in the presence of 0.5% boron trifluoride at 45°C. The yield of resin (softening point 76°C) was 107%, calculated on dicyclopentadiene and styrene together. The resin showed an excellent compatibility with ethylene vinyl acetate copolymers.

### Example 5

20 parts of dicyclopentadiene (85% purity), 21 parts of styrene (molar ratio 1:1.5), and 75 parts of a mixture of trimethylbenzenes and minor quantities of lower monoalkyl benzenes were reacted in the presence of 0.4% of boron trifluoride at 40—45°C. The resin was obtained in 100% yield, calculated on dcpd and styrene, indicating minor incorporation or alkyl groups in the resin, and showed a softening point of 98.5°C. The compatibility with ethylene vinyl acetate copolymer was excellent.

### Example 6

30 parts of dicyclopentadiene (85% purity), 21 parts of styrene (molar ratio 1:1), 1 part of phenol, 20 parts of pseudocumene and 55 parts of xylene were reacted at 40—45°C in the presence of 0.5% boron trifluoride and subsequently kept at 70°C for 4 hours. A resin was obtained in 92% yield having a softening point of 125°C.

## Example 7

30 parts of dicyclopentadiene (85% purity), 21 parts of styrene (molar ratio 1:1), 5 parts of nonylphenol, 20 parts of pseudocumene and 55 parts of xylene were reacted at 40—45°C in the presence of 1% boron trifluoride diether complex and subsequently kept for 4 hours at 70°C. A resin was obtained in 91% yield having a softening point of 112°C, which resin was compatible with ethylene vinyl acetate copolymers.

## Example 8

30 parts of dicyclopentadiene (85% purity), 21 parts of styrene (molar ratio 1:1), 5 parts of nonylphenol and 55 parts of xylene were reacted at 75°C for 4 hours in the presence of 1% boron trifluoride diether complex. The resin was obtained in 91.1% yield; softening point 106°C. The compatibility with ethylene vinyl acetate was good.

## Example 9

30 parts of dicyclopentadiene (85% purity), 21 parts of styrene (molar ratio 1:1), 5.2 parts of phenol (0.3 mole per mole of dcpd), 10.5 parts of octylphenol, 2 parts of 2-ethyl hexylacrylate in 60 parts of methylcyclohexane were reacted in the presence of 0.5% of borontrifluoride catalyst at a reaction temperature of 40—45°C.

The resin was obtained in 92% yield, Gardner colour $10^+$, softening point 90°C, and showed an excellent compatibility with ethylene vinyl acetate and had a good adhesion. The resin was completely soluble in light petroleum.

## Example 10

30 parts of dicyclopentadiene (85% purity), 21 parts of styrene (molar ratio 1:1), 5.2 parts of phenol (0.3 mole per mole of dcpd), 5.2 parts of octylphenol (0.15 mole per mole of dcpd) and 1 part of 2-ethylhexylacrylate were reacted in 60 parts of methylcyclohexane for 4 hours at 40—45°C in the presence of 0.5% of boron trifluoride. A resin was obtained in 96% yield, Gardner colour 13, softening point 109°C, having a good compatibility with ethylene vinyl acetate copolymer.

## Example 11

30 parts of dicyclopentadiene (85% purity), 21 parts of styrene (molar ratio 1:1), 6.5 parts of phenol (0.35 mole per mole of dcpd), 3.5 parts of octylphenol (0.08 mole per mole of dcpd), 1.5 parts of 2-ethyl hexylacrylate, and 30 parts of methylcyclohexane as a solvent are polymerized at 25—35°C, using 0.5% of borontrifluoride as a catalyst. The catalyst is added in 3 hours, keeping the reaction temperature in the indicated range and subsequently the mixture is kept at 30°C for 3 hours. The catalyst is neutralized by adding sufficient calcium hydroxide, the mixture is filtered and volatiles (solvents and remaining monomers) are distilled off. The resin thus obtained is hard and yellowish having Gardner colour below 8 and has a softening point of 100°C. Yield: 95%.

A hot melt adhesive is prepared by melting equal parts of this resin with an ethylene vinyl acetate copolymer containing the percentages of acetate indicated below. The adhesive was evaluated and the following results were obtained.

Shear strength (Zwick dynamometer).
Resin: ethylene vinyl acetate

| | | |
|---|---|---|
| 1:1 | 24 kg/cm² | (32% vinyl acetate) |
| 2:1 | 50 kg/cm² | (32% vinyl acetate) |
| 1:1 | 24 kg/cm² | (28% vinyl acetate) |
| 2:1 | 40 kg/cm² | (28% vinyl acetate) |
| 1:1 | 32 kg/cm² | (18% vinyl acetate) |
| 2:1 | 36 kg/cm² | (18% vinyl acetate). |

## Example 12

30 parts of dicyclopentadiene (85% purity), 21 parts of styrene (molar ratio 1:1 to dcpd), 2.5 parts of phenol (0.14 mole per mole of dcpd), 5.2 parts of octylphenol (0.13 mole per mole of dcpd), 1.5 parts of 2-ethylhexylacrylate (0.04 mole per mole of dcpd), 24 parts of piperylene concentrate (1.5 mole per mole of dcpd) (85% purity), and 30 parts of methyl cyclohexane as a solvent were polymerized at 25—35°C, using 0.5% borontrifluoride as a catalyst, following the procedure of Example 13. The resin was hard and yellowish (Gardner colour 8) and had a softening point of 82°C. Yield 90%. A pressure-sensitive adhesive was prepared by mixing in a hydrocarbon solvent parts of resin and natural rubber and deposited on a polyester film. The properties of the adhesive are indicated below.

Peel adhesion 180° in 475 grams per cm of ribbon.

Tack (= 4 cm PSTC-6 modified rolling ball) improving upon ageing.

Shear adhesion (according to PSTC-7 method): more than 24 hours (Surface 2 × 2.5 cm²; 1 kg).

**Claims for the Contracting States:**
**BE, CH, DE, FR, GB, IT, LI, LU, NL, SE**

1. A solid copolymer tackifying resin useful for adhesives, prepared by Friedel-Craft-type polymerization essentially consisting of dicyclopentadiene, a vinylaromatic hydrocarbon, a mono-, di- or tri-substituted benzene in which the substituents are chosen among lower alkyl, hydroxyl and halogen, and optionally a pentadiene and a $C_1$—$C_{12}$ alkyl ester of an unsaturated carboxylic acid, characterized in that the monomers are present in the following ratios: 1 mole of dicyclopentadiene per 0.7—1.5 moles of vinylaromatic compound, 0—3 moles of pentadiene and 0.00—0.25 mole of ester per mole of dicyclopentadiene and such an amount of substituted benzene that per average molecule of resin 0.5 to 1.5 molecules of substituted benzene are present.

2. A resin according to claim 1, characterized in that the molar ratio of dicyclopentadiene to vinylaromatic compound is from 1:1—1.5.

3. A resin according to claim 1 or 2, characterized in that the vinylaromatic hydrocarbon is styrene.

4. A resin according to claim 1, characterized in that the substituted benzene comprises a phenol.

5. A resin according to claims 1—4, characterized in that the substituted benzene comprises an alkylated phenol.

6. A resin according to claims 1—5, characterized in that the resin comprises a pentadiene in a molar ratio to dicyclopentadiene from 0—2:1.

7. A resin according to claims 1—6, characterized in that the pentadiene is a piperylene.

8. A resin according to claims 1—7, characterized in that the unsaturated ester is an acrylate ester.

9. Adhesive composition, characterized in that it comprises a tackifying resin, a compound of the class consisting of ethylen vinylacetate copolymers, natural and synthetic rubbers, in which the tackifying resin is a copolymer as claimed in any one of claims 1—8.

10. Adhesive composition according to claim 9, characterized in that the composition comprises a natural or a synthetic rubber and an organic solvent.

11. Hot-melt adhesive according to claim 9, characterized in that 20—50% by weight of the total composition is a tackifying resin as claimed in any one of the claims 1—8 and said composition comprises an ethylene vinylacetate copolymer.

**Claims for the Contracting State: AT**

1. A process for preparing a solid copolymer tackifying resin useful for adhesives, essentially consisting of dicyclopentadiene, a vinylaromatic hydrocarbon, a mono-, di- or tri-substituted benzene in which the substituents are chosen among lower alkyl, hydroxyl and halogen, and optionally a pentadiene and a $C_1$—$C_{12}$ alkyl ester of an unsaturated carboxylic acid, by heating the reactants to a temperature from 0—80°C in the presence of a Friedel-Crafts catalyst, characterized in that the reactants are present in the following ratios: 1 mole of dicyclopentadiene per 0.7—1.5 moles of vinylaromatic compound, 0—3 moles of pentadiene and 0.00—0.25 mole of ester per mole of dicyclopentadiene and such an amount of substituted benzene that per average molecule of resin 0.5 to 1.5 molecules of substituted benzene are present.

2. A process according to claim 1, characterized in that the molar ratio of dicyclopentadiene to vinylaromatic compound is from 1:0.7—2.

3. A process according to any one of claims 1—2, characterized in that the vinylaromatic hydrocarbon is styrene.

4. A process according to claim 1, characterized in that the substituted benzene comprises phenol.

5. A process according to claims 1—4, characterized in that the substituted benzene comprises an alkylated phenol.

6. A process according to claims 1—5, characterized in that the resin comprises a pentadiene in a molar ratio to dicyclopentadiene from 0—2:1.

7. A process according to claims 1—6, characterized in that the pentadiene is a piperylene.

**Patentansprüche für die Vertragsstaaten: BE, CH, DE, FR, GB, IT, LI, NL, SE**

1. Ein festes, Copolymeres klebrig machendes Harz, hergestellt durch Polymerization von Friedel-Crafts-Typ, dass in Klebstoffen brauchbar ist, im wesentlichen bestehend aus Dicyclopentadien, einem vinylaromatischen Kohlenwasserstoff, einem mono-, di- oder trisubstituierten Benzol, in welchem die Substituenten ausgewählt sind aus nied.-Alkyl, Hydroxyl und Halogen, und gegebenenfalls einem Pentadien und einem $C_1$—$C_{12}$-Alkylester einer ungesättigten Carbonsäure, dadurch gekennzeichnet, dass die Monomeren in den folgenden Verhältnissen vorliegen: 1 Mol Dicyclopentadien je 0,7—1,5 Mol vinylaromatische Verbindung, 0—3 Mol Pentadien und 0,00—0,25 Mol Ester je Mol Dicyclopentadien und eine solche Menge an substituiertem Benzol, dass je durchschnittliches Harzmolekül 0,5 bis 1,5 Moleküle substituiertes Benzol anwesend sind.

2. Ein Harz nach Anspruch 1, dadurch gekennzeichnet, dass das molare Verhältnis von Dicyclopentadien zur vinylaromatischen Verbindung 1:1—1,5 beträgt.

3. Ein Harz nach einem der Ansprüche 1—2, dadurch gekennzeichnet, dass der vinylaromatische Kohlenwasserstoff Styrol ist.

4. Ein Harz nach Anspruch 1, dadurch gekennzeichnet, dass das substituierte Benzol ein Phenol umfasst.

5. Ein Harz nach den Ansprüchen 1—4, dadurch gekennzeichnet, dass das substituierte Benzol ein alkyliertes Phenol umfasst.

6. Ein Harz nach den Ansprüchen 1—5, dadurch gekennzeichnet, dass das Harz ein Pentadien in einem molaren Verhältnis zu Dicyclopentadien von 0—2:1 umfasst.

7. Ein Harz nach den Ansprüchen 1—6, dadurch gekennzeichnet, dass das Pentadien ein Piperylen ist.

8. Ein Harz nach den Ansprüchen 1—7, dadurch gekennzeichnet, dass der ungesättigter Ester ein Acrylatester ist.

9. Klebstoff Zusammensetzung, dadurch gekennzeichnet, dass diese Zusammensetzung ein klebrig machendes Harz, eine Verbindung aus der Klasse bestehend aus Äthylen-Vinylacetat-Copolymeren, natürlichen oder synthetischen Kautschuk enthält, wobei das klebrig machende Harz ein Copolymeres ist wie beansprucht nach einer der Ansprüchen 1—8.

10. Klebstoff Zusammensetzung nach Anspruch 9, dadurch gekennzeichnet, dass die Zusammensetzung einen natürlichen oder synthetischen Kautschuk und ein organisches Lösungsmitteln enthält.

11. Schmelz-Klebstoff nach Anspruch 9, dadurch gekennzeichnet, dass 20—50 Gew.% der ganzen Zusammensetzung aus ein klebrig machendes Harz wie beansprucht in einer der Ansprüche 1—8 ist und genannte Zusammensetzung ein Äthylen-Vinylacetat-Copolymer umfasst.

**Patentansprüche für den Vertragsstaat: AT**

1. Verfahren zur Herstellung eines festen, Copolymere klebrig machenden Harzes, das in Klebstoffen brauchbar ist, im wesentlichen bestehend aus Dicyclopentadien, einem vinylaromatischen Kohlenwasserstoff, einem mono-, di- oder trisubstituierten Benzol, in welchem die Substituenten ausgewählt sind aus nied.-Alkyl, Hydroxyl und Halogen, und gegebenenfalls einem Pentadien und einem $C_1$—$C_{12}$-Alkylester einer ungesättigten Carbonsäure, durch Erhitzen der Reaktanten auf eine Temperatur von 0—80°C in Gegenwart eines Friedel-Crafts-Katalysators, dadurch gekennzeichnet, daß die Reaktanten in den folgenden Verhältnissen vorliegen: 1 Mol Dicyclopentadien je 0,7—1,5 Mol vinylaromatische Verbindung, 0—3 Mol Pentadien und 0,00—0,25 Mol Ester je Mol Dicyclopentadien und eine solche Menge an substituiertem Benzol, daß je durchschnittliches Harzmolekül 0,5 bis 1,5 Moleküle substituiertes Benzol anwesend sind.

2. Verfahren nach Anspruch 1, dadurch gekennzeichnet, daß das molare Verhältnis von Dicyclopentadien zur vinylaromatischen Verbindung 1:0,7—2 beträgt.

3. Verfahren nach einem der Ansprüche 1—2, dadurch gekennzeichnet, daß der vinylaromatische Kohlenwasserstoff Styrol ist.

4. Verfahren nach Anspruch 1, dadurch gekennzeichnet, daß das substituierte Benzol ein Phenol umfaßt.

5. Verfahren nach den Ansprüchen 1—4, dadurch gekennzeichnet, daß das substituierte Benzol ein alkyliertes Phenol umfaßt.

6. Verfahren nach den Ansprüchen 1—5, dadurch gekennzeichnet, daß das Harz ein Pentadien in einem molaren Verhältnis zu Dicyclopentadien von 0—2:1 umfaßt.

7. Verfahren nach den Ansprüchen 1—6, dadurch gekennzeichnet, daß das Pentadien ein Piperylen ist.

**Revendications pour les Etats Contractants: BE, CH, DE, FR, GB, IT, LI, NL, SE**

1. Résine de copolymère solide tackifiante utile pour les adhésifs, préparée par une polymérisation de type Friedel et Craft, constituée essentiellement par du dicyclopentadiène, un hydrocarbure vinylaromatique, un benzène mono-, di- ou trisubstitué dans lequel les substituants sont choisis parmi un alkyle inférieur, un hydroxyle et un halogène et, éventuellement, un pentadiène et un ester alkylique en $C_1$—$C_{12}$ d'un acide carboxylique insaturé, caractérisée en ce que les monomères sont présents dans les proportions suivantes: 1 mole de dicyclopentadiène par 0,7—1,5 moles de composé vinylaromatique, 0—3 moles de pentadiène et 0,00—0,25 mole d'ester par mole de dicyclopentadiène et une quantité de benzène substitué telle que 0,5 à 1,5 molécules de benzène substitué soient présentes, en moyenne, par molécule de résine.

2. Résine selon la revendication 1, caractérisée en ce que le rapport molaire du dicyclopentadiène au composé vinylaromatique est de 1:1—1,5.

3. Résine selon la revendication 1 ou 2, caractérisée en ce que l'hydrocarbure vinylaromatique est le styrène.

4. Résine selon la revendication 1, caractérisée en ce que le benzène substitué comprend un phénol.

5. Résine selon les revendications 1 à 4, caractérisée en ce que le benzène substitué comprend un phénol alkylé.

6. Résine selon les revendications 1 à 5, caractérisée en ce que la résine contient un pentadiène en rapport molaire par rapport au dicyclopentadiène de 0—2:1.

7. Résine selon les revendications 1 à 6, caractérisée en ce que le pentadiène est un pipérylène.

8. Résine selon les revendications 1 à 7, caractérisée en ce que l'ester insaturé est un ester acrylate.

9. Composition adhésive, caractérisée en ce qu'elle contient une résine tackifiante, un composé de la classe constituée par les copolymères éthylène-acétate de vinyle, des caoutchoucs naturels et synthétiques, dans la quelle la résine tackifiante est un copolymère selon l'une quelconque des revendications 1 à 8.

10. Composition adhésive selon la revendication 9, caractérisée en ce que la composition contient un caoutchouc naturel ou un caoutchouc synthétique et un solvant organique.

11. Adhésive thermofusible selon la revendication 9, caractérisé en ce que 20—50% en poids, par rapport à l'ensemble de la composition, est une résine tackifiante selon l'une quelconque des revendications 1 à 8 et ladite composition contient un copolymère éthylène-acétate de vinyle.

**Revendications pour l'Etat Contractant: AT**

1. Procédé de préparation d'une résine de copolymère solide tackifiante utile pour les adhésifs, constituée essentiellement par du dicyclopentadiène, un hydrocarbure vinylaromatique, un benzène mono-, di- ou trisubstitué dans lequel les substituants sont choisis parmi un alkyle inférieur, un hydroxyle et un halogène et, éventuellement, un pentadiène et un ester alkylique en $C_1$—$C_{12}$ d'un acide carboxylique insaturé, par chauffage des réactifs à une température de 0—80°C en présence d'un catalyseur de Friedel et Craft, caractérisé en ce que les réactifs sont présents dans les proportions suivantes: 1 mole de dicyclopentadiène par 0,7—1,5 moles de composé vinylaromatique, 0—3 moles de pentadiène et 0,00—0,25 mole d'ester par mole de dicyclopentadiène et une quantité de benzène substitué telle que 0,5 à 1,5 molécules de benzène substitué soient présentes, en moyenne, par molécule de résine.

2. Procédé selon la revendication 1, caractérisé en ce que le rapport molaire du dicyclopentadiène au composé vinylaromatique est de 1:0,7—2.

3. Procédé selon l'une quelconque des revendications 1 et 2, caractérisé en ce que l'hydrocarbure vinylaromatique est le styrène.

4. Procédé selon la revendication 1, caractérisé en ce que le benzène substitué comprend un phénol.

5. Procédé selon les revendications 1 à 4, caractérisé en ce que le benzène substitué comprend un phénol alkylé.

6. Procédé selon les revendications 1 à 5, caractérisé en ce que la résine contient un pentadiène en rapport molaire par rapport au dicyclopentadiène de 0—2:1.

7. Procédé selon les revendications 1 à 6, caractérisé en ce que le pentadiène est un pipérylène.